# EUROPÄISCHE PATENTANMELDUNG

(11) **EP 3 680 740 A1**
(43) Veröffentlichungstag der Anmeldung: **15.07.2020**
(21) Anmeldenummer: 19151464.5
(22) Anmeldetag: 11.01.2019
(51) Int. Cl.: G05B 23/02

(54) **ANZEIGE VON OBJEKTEN ALS FOLGE DER SELEKTION EINER ALARMMELDUNG**

(71) Anmelder: Siemens Aktiengesellschaft, 80333 München (DE)
(72) Erfinder: Glaser, Martin, 76698 Ubstadt-Weiher (DE); Lutz, Benjamin, 76327 Pfinztal (DE)

(57) **Zusammenfassung**

Vorgeschlagen wird ein Leitsystem (1) für ein technisches System, insbesondere eine Fertigungs- oder Prozessanlage, das dazu ausgebildet und vorgesehen ist, Alarmmeldungen des technischen Systems auszugeben, die technischen Objekten des technischen Systems zugeordnet sind. Das Leitsystem (1) ist erfindungsgemäß dadurch gekennzeichnet, dass es einen computerimplementierten Alarmdienst (10) aufweist, der dazu ausgebildet und vorgesehen ist, bedingt durch eine Selektion einer Alarmmeldung durch einen Operator des technischen Systems, ein isoliertes Bedienbild (12) eines technischen Objekts des technischen Systems auszugeben, wobei die durch den Operator selektierte Alarmmeldung dem technischen Objekt zugeordnet ist.

## Beschreibung

Die Erfindung betrifft ein Leitsystem für ein technisches System, insbesondere eine Fertigungs- oder Prozessanlage, das dazu ausgebildet und vorgesehen ist, Alarmmeldungen des technischen Systems auszugeben, die technischen Objekten des technischen Systems zugeordnet sind, mit den Merkmalen des Anspruchs 1. Außerdem betrifft die Erfindung ein Verfahren zur Ausgabe eines Bedienbilds wenigstens eines einem technischen System, insbesondere einer Fertigungs- oder Prozessanlage, zugeordneten technischen Objekts auf einem hierzu geeigneten Anzeigegerät mittels eines Alarmdienstes eines Leitsystems des technischen Systems gemäß Anspruch 4. Zudem betrifft die Erfindung eine Verwendung eines Leitsystems zum Betrieb eines technischen Systems gemäß Anspruch 7.

Für die Bedienung und Beobachtung von technischen Systemen wie beispielsweise verfahrenstechnischen Anlagen durch Operatoren ist ein effizientes Alarmmanagement von zentraler Bedeutung. Ein wesentliches Werkzeug zur visuellen Darstellung von Alarmmeldungen bzw. Alarmen des technischen Systems ist die so genannte Meldefolgeanzeige, in der Alarme tabellarisch nach unterschiedlichen Sortierkriterien (z.B. Zeitstempel) aufgelistet werden können. Neben aktuellen Alarmmeldungen können auch historische Alarme dargestellt werden.

Um weitergehende Informationen über einen in der Meldefolgeanzeige angezeigten Alarm beziehen zu können, kann der Operator für einen Alarm einen so genannten Loop-In durchführen. Hierbei wird eine grafische Repräsentation des technischen Systems geöffnet, in der das alarmgebende Objekt des technischen Systems mit einem Blocksymbol enthalten ist und Teil eines sogenannten Gruppenalarmstatus der grafischen Repräsentation des technischen Systems ist. Ausgehend von der grafischen Repräsentation kann der Operator die Hintergründe zum aktiven Alarm evaluieren.

Ist das Prozessobjekt jedoch in keinem Anlagenbild enthalten, wird auch kein sogenannter "Alarm Loop-In" durchgeführt. Zudem kann nach dem Stand der Technik jeweils nur ein Alarm Loop-In durchgeführt werden. Da ein Alarm aber oftmals nicht auf ein einziges Prozessobjekt beschränkt ist, sondern durch eine verfahrenstechnische Kette in Zusammenhang mit anderen Prozessobjekten steht, ist ein multipler Alarm Loop-In im Sinne einer effizienteren Alarmbehandlung vonnöten.

Die DE 10 2007 060 281 A1 offenbart ein Verfahren und eine entsprechende Einrichtung, mittels denen abhängig von anlagenspezifischen Zustandsinformationen nicht benötigte und/oder nicht erwünschte Alarmmeldungen zumindest anteilig unterbunden werden und mittels Verknüpfung von Alarmmeldungen mit anlagenspezifischen Zustandsinformation eine Selektion der Alarmmeldungen bewirkt wird.

Der Erfindung liegt die Aufgabe zugrunde, eine effizientere Alarmbehandlung durch ein Leitsystem eines technischen Systems anzugeben.

Diese Aufgabe wird gelöst durch ein Leitsystem für ein technisches System mit den Merkmalen des Anspruchs 1. Außerdem wird die Aufgabe gelöst durch ein Verfahren zur Ausgabe eines Bedienbilds wenigstens eines einem technischen System zugeordneten technischen Objekts gemäß Anspruch 4 und eine Verwendung eines Leitsystems zum Betrieb eines technischen Systems gemäß Anspruch 7. Vorteilhafte Weiterbildungen ergeben sich aus den abhängigen Ansprüchen.

Bei einem Leitsystem der eingangs beschriebenen Art wird die Aufgabe erfindungsgemäß dadurch gelöst, dass das Leitsystem einen computerimplementierten Alarmdienst aufweist, der dazu ausgebildet und vorgesehen ist, bedingt durch eine Selektion einer Alarmmeldung durch einen Operator des technischen Systems, ein isoliertes Bedienbild eines technischen Objekts des technischen Systems auszugeben, wobei die durch den Operator selektierte Alarmmeldung dem technischen Objekt zugeordnet ist.

Unter einem Leitsystem wird im vorliegenden Kontext ein computergestütztes technisches System verstanden, das Funktionalitäten zum Darstellen, Bedienen und Leiten eines technischen Systems wie einer Fertigungs- oder Produktionsanlage umfasst. Das Leitsystem umfasst im vorliegenden Fall Sensoren zur Ermittlung von Messwerten sowie verschiedene Aktoren. Zudem umfasst das Leitsystem sogenannte prozess- oder fertigungsnahe Komponenten, die zur Ansteuerung der Aktoren bzw. Sensoren dienen. Darüber hinaus weist das Leitsystem u.a. Mittel zur Visualisierung der technischen Anlage und zu einem Engineering auf. Unter dem Begriff Leitsystem sind zusätzlich auch weitere Recheneinheiten für komplexere Regelungen und Systeme zur Datenspeicherung und -verarbeitung zu fassen.

Unter einem technischen System wird vorliegend eine Mehrzahl an Maschinen, Geräten, Applikationen oder dergleichen verstanden, die in einem funktionalen und oftmals auch räumlichen Zusammenhang zueinanderstehen. Mittels des technischen Systems können beispielsweise in (groß-)technischen Dimensionen Produkte, Komponenten und dergleichen erzeugt bzw. gefertigt werden. Bei dem technischen System kann es sich beispielsweise aber auch um ein Automobil, ein Schiff, ein Flugzeug oder dergleichen handeln.

Bei einem technischen Objekt kann es sich um einzelne Sensoren oder Aktoren des technischen Systems handeln. Ein technisches Objekt kann aber auch ein Zusammenschluss mehrerer Sensoren und/oder Aktoren sein, beispielsweise ein Motor, ein Reaktor, eine Pumpe oder ein Ventilsystem.

Eine Alarmmeldung ist eine Meldung, die eine in der Regel unverzügliche Reaktion eines Operators des technischen Systems erfordert. Unter einer Meldung wird dabei ein Bericht vom Eintreten eines Ereignisses verstanden, das einen Übergang aus einem diskreten Zustand innerhalb des technischen Systems in einen anderen diskreten Zustand darstellt.

Unter einem Operator wird ein menschlicher Bediener des technischen Systems verstanden. Der Operator interagiert mittels spezieller Benutzerschnittstellen mit dem technischen System bzw. dessen Leitsystem und steuert spezielle technische Funktionen des Systems. Hierzu kann der Operator ein Bedien- und Beobachtungssystem des Leitsystems nutzen.

Erfindungsgemäß ist der computerimplementierte Alarmdienst des Leitsystems dazu ausgebildet und vorgesehen, auf Grundlage einer Selektion einer Alarmmeldung durch einen Operator ein isoliertes Bedienbild eines technischen Objekts auszugeben. Die Alarmmeldung kann dabei in einer Meldefolgeanzeige des Leitsystems dem Operator zur Selektion dargeboten sein.

Ein wesentlicher Punkt der Erfindung liegt darin, dass es sich um ein "isoliertes" Bedienbild handelt. Dies bedeutet, dass das Bedienbild des zu der selektierten Alarmmeldung gehörigen technischen Objekts unabhängig kontextunabhängig ausgegeben wird. Mit anderen Worten ist der computerimplementierte Alarmdienst dazu ausgebildet und vorgesehen, das zu dem technischen Objekt gehörige leittechnische Bedienbild (zum Bedienen und Beobachten durch den Operator) unabhängig von einem Bedienbild des gesamten technischen Systems bzw. weiteren technischen Objekten des technischen Systems auszugeben. Bei Auftreten einer Alarmmeldung lässt sich deren Ursache bei dem erfindungsgemäßen Leitsystem unabhängig von einer bedientechnischen Repräsentation der technischen Objekte des Leitsystems schnell und effizient ermitteln.

Das erfindungsgemäße "Alarm Loop-In" lässt sich nicht nur für aktive, sondern auch für historische Alarmmeldungen anwenden. Dies bedeutet, dass auch in einer historischen Meldefolgeanzeige über Selektionen ein isoliertes (jedoch aktuelles) Bedienbild ausgegeben werden kann.

Dieser Vorteil muss nicht auf das Auftreten einer einzigen Alarmmeldung beschränkt sein. Vielmehr ist der computerimplementierte Alarmdienst bei einer vorteilhaften Weiterbildung der Erfindung dazu ausgebildet und vorgesehen, bedingt durch eine Selektion einer Mehrzahl an Alarmmeldungen durch einen Operator des technischen Systems, eine Mehrzahl an isolierten Bedienbildern von technischen Objekten des technischen Systems auszugeben, wobei die durch den Operator selektierten Alarmmeldungen jeweils einem der technischen Objekte zugeordnet sind. Durch diese Weiterbildung kann der Operator ein multiples Alarm Loop-In (von Meldefolgeanzeigen ausgehend) anstoßen. Diese können simultan durchgeführt werden.

Bevorzugt ist der computerimplementierte Alarmdienst dazu ausgebildet und vorgesehen, eine Ausgabe der isolierten Bedienbilder gemäß einem festgelegten Kriterium zu bewirken, vorzugsweise gemäß einer technologischen Hierarchie der zu den Bedienbildern gehörigen technischen Objekte. Beim multiplen Alarm Loop-In werden die isolierten Bedienbilder dabei automatisch in einer bestimmten, vorzugsweise verfahrenstechnischen Reihenfolge sortiert - die Reihenfolge kann dabei in vorteilhafter Weise einem verfahrenstechnischen Strang entsprechen, anhand dessen schneller die Ursache eines sogenannten Alarmschwalls (einer Vielzahl an Alarmmeldungen) evaluiert werden kann.

Die Aufgabe wird zudem gelöst durch ein Verfahren zur Ausgabe eines Bedienbilds wenigstens eines einem technischen System, insbesondere einer Fertigungs- oder Prozessanlage, zugeordneten technischen Objekts auf einem hierzu geeigneten Anzeigegerät mittels eines Alarmdienstes eines Leitsystems des technischen Systems. Das Verfahren umfasst die folgenden Schritte:
a) Selektion einer Alarmmeldung durch einen Operator des technischen Systems, wobei die Alarmmeldung dem technischen Objekt zugeordnet ist;
b) Ausgabe eines isolierten Bedienbilds des technischen Objekts des technischen Systems auf dem Anzeigegerät mittels des Alarmdienstes.

Vorteilhafterweise selektiert der Operator eine Mehrzahl an Alarmmeldungen, wobei die durch den Operator selektierten Alarmmeldungen jeweils einem der technischen Objekte des technischen Systems zugeordnet sind, und bei dem eine Mehrzahl an isolierten Bedienbildern der technischen Objekte des technischen Systems auf dem Anzeigegerät mittels des Alarmdienstes ausgegeben wird.

Besonders bevorzugt bewirkt der Alarmdienst des Leitsystems des technischen Systems eine Ausgabe der isolierten Bedienbilder gemäß einem festgelegten Kriterium, vorzugsweise gemäß einer technologischen Hierarchie der zu den Bedienbildern gehörigen technischen Objekte.

Die Aufgabe wird zudem durch die Verwendung eines zuvor beschriebenen Leitsystems zum Betrieb eines technischen Systems, insbesondere einer Fertigungs- oder Prozessanlage, gelöst.

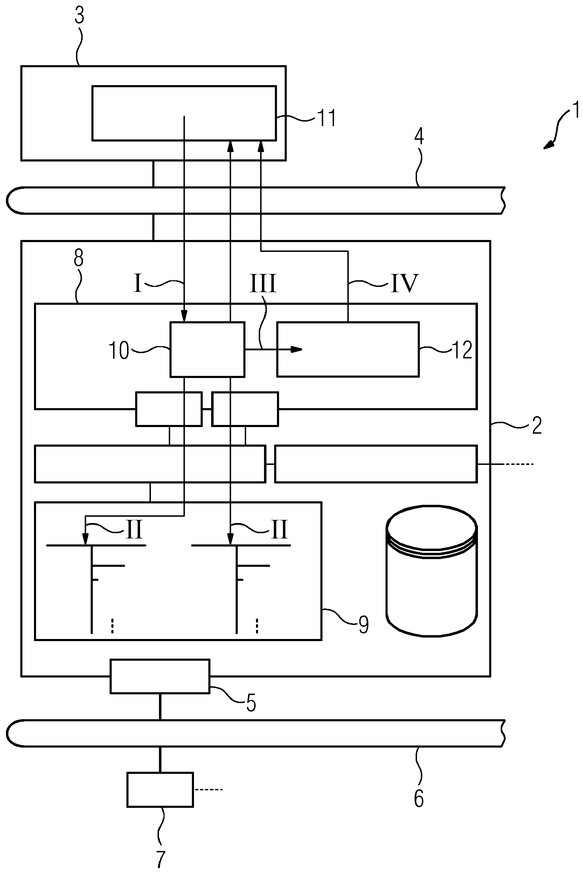

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit der Zeichnung näher erläutert wird.

In der Figur ist ein Teil eines erfindungsgemäßen Leitsystems 1 eines als verfahrenstechnischen Anlage ausgebildeten technischen Systems dargestellt. Das Leitsystem 1 umfasst einen Server eines Bediensystems bzw. einen Operator System Server 2 und einen dazugehörigen Operator System Client 3. Der Operator System Server 2 und der Operator System Client 3 sind über einen Terminmalbus 4 miteinander und mit nicht dargestellten weiteren Komponenten des Leitsystems 1 wie einem Engineering System Server oder einem Prozessdatenarchiv verbunden.

Ein Benutzer bzw. Operator hat mittels des Operator System Servers 3 mittels des Terminalbus 4 im Kontext eines Bedienens und Beobachtens Zugriff auf den Operator System Server 2. Der Terminalbus 4 kann, ohne sich darauf zu beschränken, beispielsweise als Industrial Ethernet ausgebildet sein.

Der Operator System Server 2 weist eine Geräteschnittstelle 5 auf, die mit einem Anlagenbus 6 verbunden ist. Hierüber kann der Operator System Server 2 mit einem (externen) Gerät 7 kommunizieren. Bei dem angeschlossenen Gerät 7 kann es sich dabei alternativ auch um eine Applikation, insbesondere Webapplikation, handeln. Im Rahmen der Erfindung kann eine beliebige Zahl an Geräten und/oder Applikationen an den Operator System Server 2 angeschlossen sein. Der Anlagenbus 6 kann, ohne sich darauf zu beschränken, beispielsweise als Industrial Ethernet ausgebildet sein. Das Gerät 7 kann wiederum mit einer beliebigen Anzahl an Subsystemen (nicht dargestellt) verbunden sein.

In dem Operator System Server 2 ist ein Visualisierungsdienst 8 integriert, über den eine Übertragung von (Visualisierungs-)Daten an den Operator System Client 3 erfolgen kann. Zudem weist der Operator System Server 4 ein Prozessabbild (Process Image) 9 und einen Alarmdienst 10 auf.

Wenn ein Operator aus einer ihm mittels des Operator System Clients 3 dargebotenen Meldefolgeanzeige 11 einen so genannten Alarm Loop-In durchführen möchte, kann er die jeweilige Alarmmeldung in einer Liste der Meldefolgeanzeige 11 selektieren und den eigentlichen Alarm Loop-In anstoßen. Die Selektion wird von dem Alarmdienst 10 erfasst (Schritt I).

Anschließend bestimmt der Alarmdienst 10 in einem optionalen Schritt II einen sogenannten "Primary Screen" des alarmgebenden technischen Prozessobjekts - also ein übergeordnetes Bedienbild, in dem das alarmgebende Prozessobjekt enthalten ist und zu dessen Gruppenalarmzustand es einen Alarmbeitrag leistet.

Erfindungsgemäß greift der Alarmdienst 10 auf ein zu der jeweiligen Alarmmeldung bzw. dem technischen (Prozess-)Objekt dazugehöriges isoliertes Bedienbild 12 zu (Schritt III).

In einem letzten Schritt IV wird dem Operator das isolierte Bedienbild mittels des Operator Systems Clients 3 ausgegeben bzw. angezeigt.

Im ersten Schritt I kann der Operator für einen Alarm Loop-In multiple Alarmmeldungen gleichzeig in der Liste markieren. Der Alarmdienst 10 ruft dabei direkt die dazugehörigen isolierten Bedienbilder 12 ab und überträgt diese an den Operator System Client 3. Die Bedienbilder 12 werden dabei gemäß einem festgelegten Kriterium sortiert ausgegeben. Dabei kann es sich um eine verfahrenstechnische Sortierung handeln, die definiert, an welcher Position auf einer Anzeige des Operator System Clients 3 die jeweiligen isolierten Bedienbilder 12 ausgegeben werden.

Die Sortierung erfolgt vorteilhafterweise gemäß einer technologischen Hierarchie der zu den Bedienbildern gehörigen technischen Objekte. Sind ein erstes technisches Objekt beispielsweise einem technologischen Pfad "Plant/SubPlant1/Tanks /Tank1/" und ein zweites technisches Objekt einem technologischen Pfad "Plant/SubPlant1/Boiler/Heater1/" zugeordnet, wobei der letztgenannte technologische Pfad vor dem erstgenannten technologischen Pfad in der technologischen Hierarchie liegt, so wird das zweite technische Objekt in der Sortierung vor dem ersten technischen Objekt eingeordnet.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Leitsystem (1) für ein technisches System, insbesondere eine Fertigungs- oder Prozessanlage, das dazu ausgebildet und vorgesehen ist, Alarmmeldungen des technischen Systems auszugeben, die technischen Objekten des technischen Systems zugeordnet sind,
**dadurch gekennzeichnet, dass**
das Leitsystem (1) einen computerimplementierten Alarmdienst (10) aufweist, der dazu ausgebildet und vorgesehen ist, bedingt durch eine Selektion einer Alarmmeldung durch einen Operator des technischen Systems, ein isoliertes Bedienbild (12) eines technischen Objekts des technischen Systems auszugeben, wobei die durch den Operator selektierte Alarmmeldung dem technischen Objekt zugeordnet ist.

2. Leitsystem (1) nach Anspruch 1, bei dem der computerimplementierte Alarmdienst (10) dazu ausgebildet und vorgesehen ist, bedingt durch eine Selektion einer Mehrzahl an Alarmmeldungen durch einen Operator des technischen Systems, eine Mehrzahl an isolierten Bedienbildern (12) von technischen Objekten des technischen Systems auszugeben, wobei die durch den Operator selektierten Alarmmeldungen jeweils einem der technischen Objekte zugeordnet sind.

3. Leitsystem (1) nach Anspruch 2, bei dem der computerimplementierte Alarmdienst (10) dazu ausgebildet und vorgesehen ist, eine Ausgabe der isolierten Bedienbilder (12) gemäß einem festgelegten Kriterium zu bewirken, vorzugsweise gemäß einer technologischen Hierarchie der zu den isolierten Bedienbildern (12) gehörigen technischen Objekte.

4. Verfahren zur Ausgabe eines isolierten Bedienbilds (129 wenigstens eines einem technischen System, insbesondere einer Fertigungs- oder Prozessanlage, zugeordneten technischen Objekts auf einem hierzu geeigneten Anzeigegerät (3) mittels eines Alarmdienstes (10) eines Leitsystems (1) des technischen Systems, umfassend:
a) Selektion einer Alarmmeldung durch einen Operator des technischen Systems, wobei die Alarmmeldung dem technischen Objekt zugeordnet ist;
b) Ausgabe eines isolierten Bedienbilds (12) des technischen Objekts des technischen Systems auf dem Anzeigegerät (3) mittels des Alarmdienstes (10).

5. Verfahren nach Anspruch 4, bei dem der Operator eine Mehrzahl an Alarmmeldungen selektiert, wobei die durch den Operator selektierten Alarmmeldungen jeweils einem der technischen Objekte des technischen Systems zugeordnet sind, und bei dem eine Mehrzahl an isolierten Bedienbildern (12) der technischen Objekte des technischen Systems auf dem Anzeigegerät (3) mittels des Alarmdienstes (10) ausgegeben wird.

6. Verfahren nach Anspruch 5, bei dem der Alarmdienst (10) des Leitsystems des technischen Systems eine Ausgabe der isolierten Bedienbilder (12) gemäß einem festgelegten Kriterium bewirkt, vorzugsweise gemäß einer technologischen Hierarchie der zu den isolierten Bedienbildern (12) gehörigen technischen Objekte.

7. Verwendung eines Leitsystems (1) gemäß einem der Ansprüche 1 bis 3 zum Betrieb eines technischen Systems, insbesondere einer Fertigungs- oder Prozessanlage.
